(19) Europäisches Patentamt
European Patent Office
Office européen des brevets

(11) Publication number: **0 066 024**
**B1**

(12) **EUROPEAN PATENT SPECIFICATION**

(45) Date of publication of patent specification: **12.11.86**

(51) Int. Cl.$^4$: **C 22 B 19/26,** C 01 G 9/06

(21) Application number: **81305929.2**

(22) Date of filing: **17.12.81**

# (54) Process for the removal of manganese and chloride ions from aqueous acidic zinc sulphate solutions and process for the recovery of zinc.

(30) Priority: **02.06.81 CA 378802**

(43) Date of publication of application:
**08.12.82 Bulletin 82/49**

(45) Publication of the grant of the patent:
**12.11.86 Bulletin 86/46**

(84) Designated Contracting States:
**BE DE FR GB NL**

(56) References cited:
**EP-A-0 013 098**
**US-A-3 867 268**
**US-A-4 263 109**

(73) Proprietor: **Sherritt Gordon Mines Limited**
**2800 Commerce Court West**
**Toronto, Ontario (CA)**

(72) Inventor: **Bolton, Gerald Lloyd**
**9506-87th Street**
**Fort Saskatchewan Alberta (CA)**
Inventor: **Sefton, Verner Blakey**
**3907 Ascot Drive**
**Victoria British Columbia (CA)**
Inventor: **Zubryckyj, Nicolaus**
**9339-96th Street**
**Edmonton Alberta (CA)**

(74) Representative: **Lambert, Hugh Richmond et al**
**D. YOUNG & CO. 10 Staple Inn**
**London, WC1V 7RD (GB)**

**EP 0 066 024 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the removal of manganese and chloride ions from aqueous acidic zinc sulphate solutions and also to the recovery of zinc.

In many processes for the recovery of zinc, zinc containing material such as zinc concentrate is treated to produce an aqueous acidic zinc sulphate solution, and this solution is electrolyzed to produce elemental zinc. Such treatment may include, for example, aqueous acidic oxidation leaching of an unroasted zinc sulphide containing material. Processes of this kind are described in United States Patents Nos. 2,996,440, 3,477,927 and 3,867,268. Other earlier processes include the oxidation roasting of zinc sulphide containing material, followed by aqueous acidic leaching of the resulting oxidic calcine.

For various reasons, the aqueous acidic zinc sulphate solution to be electrolyzed may contain undesirably high concentrations of manganese ions and chlorine ions. Manganese and chlorine may be present in the zinc containing material and hence may appear as manganese ions and chlorine ions in the aqueous acidic sulphate solution to be leached. This is especially so in processes in which unroasted zinc sulphide material is leached in an aqueous acid oxidation leach. In other processes in which the zinc sulphide material is first subjected to an oxidation roast step to produce an oxidic calcine, some of the chlorine is lost in the roasting step. However, even in such processes, there may be undesirably high concentrations of chlorine ions in the subsequent leach solution.

Alternatively, a manganese containing compound or a chlorine containing compound may be used in a treatment step prior to electrolysis. For example, manganese dioxide may be added in the leach step to promote the oxidation of iron in the zinc containing material, and the utilization of this step generally results in the presence of manganese ions in the leach solution. Also, zinc dross may be added in a leach solution purification step and, since commercial zinc dross usually contains chlorine, the utilization of this step will result in chlorine ions being present in the solution to be electrolyzed.

Although a relatively low concentration of manganese can be tolerated in the acidic zinc sulphate solution to be electrolyzed and may in fact be beneficial to the electro-winning step, manganese ion concentrations above about 5 g/L are not acceptable. Similarly, the presence of more than a low concentration of chlorine ions in the solution and in various process steps after the leach step causes a problem because of the corrosive nature of the chlorine ions. For example, it is usually desirable that the chlorine ion concentration be less than about 50 mg/L.

EP—A—0 013 098 concerns a process for removing manganese ions from an aqueous acidic sulphate solution containing zinc and manganese ions without removing a substantial amount of zinc ions from the solution, the process comprising adjusting the free acidity of the solution to a free acidity of at least about 0.1 molar, treating the solution with ozone to oxidize manganese ions to manganese dioxide, and removing manganese dioxide from the solution.

The present invention is based on the discovery that chlorine ions can also be removed in the manganese removal step by continuing the ozone treatment for a sufficient time. It has been found that initially the ozone primarily oxidizes the manganese ions and reacts with the chlorine ions when the manganese ion concentration has fallen to a relatively low level. The chlorine ions are oxidized to chlorine gas which is emitted from the solution, with some chlorate ions possibly also being formed. It is believed that the oxidation of chlorine ions is catalyzed by the presence in the solution of manganic or permanganate ions, that is to say manganese ions in a higher oxidation state than manganous ions.

Accordingly therefore, the present invention provides a process of reducing the chloride ion content of aqueous acidic zinc sulphate solutions containing at least 50 mg/L chloride ion and manganese, which comprises adjusting, if necessary, the free acidity of the solution to 0.1 molar or above, and thereafter treating the solution with ozone for a period of time sufficient to remove a substantial part of the manganese ion, characterised in that after removal of said substantial part of the manganese ion the ozone treatment is continued to remove a manganese amount of greater than 99%, thereby simultaneously removing at least a major proportion of the chloride ion based on the original chloride ion concentration.

Where the solution initially contains from about 100 to about 1000 mg/L chlorine ions, the ozone treatment may reduce the chlorine concentration to less than about 50 mg/L chlorine ions. Alternatively, where the solution initially contains from about 50 to about 100 mg/L chlorine ions, the ozone treatment may reduce the chlorine concentration to less than about 10 mg/L chlorine ions.

The initial solution will usually contain from about 5 to about 170 mg/L zinc ions and from about 1 to about 25 g/L manganese ions. More usually, the initial solution may contain from about 30 to about 60 g/L zinc ions and from about 4 to about 12 g/L manganese ions.

The initial solution preferably has a free acidity of from 0.1 to about 2.5 molar. The ozone treatment is preferably carried out after the electro-winning step where the spent electrolyte usually has a free acidity of from about 0.1 to about 2 molar. The ozone treatment may be carried out on purified leach solution with less free acid and prior to electrolysis, with the free acidity first being raised by the addition of acid so as to have a free acidity in the 0.1 to 2 molar range. The temperature of the solution during ozone treatment is preferably from about 20 to about 60°C.

The ozone treatment is preferably carried out

by passing the solution in succession through at least two cells and passing ozone in succession through the cells in countercurrent flow to the solution flow, the flow of ozone being sufficient to oxidize a sufficient amount of manganese ions before the final cell such that the ozone oxidizes a sufficient amount of chlorine ion in the final cell to reduce the chlorine concentration in the solution leaving the final cell to a predetermined value.

A preferred embodiment of the present invention will now be described by way of example, with reference to the accompanying drawings, in which:

Figure 1 is a flow diagram of a zinc extraction process; and

Figure 2 shows the manganese and chlorine removal step of the process of Figure 1 in more detail.

Referring to the drawing, zinc sulphide concentrate which also contains manganese and chlorine is supplied, after suitable pre-treatment such as grinding, to an acid oxidation pressure leach step 12 in which the leaching medium is aqueous sulphuric acid solution, for example as described in United States Patent No. 3,867,268, so that the following primary reaction takes place:

$$ZnS+H_2SO_4+\tfrac{1}{2}O_2 \rightarrow ZnSO_4+S\downarrow+H_2O$$

Some manganese and chlorine are also dissolved in this leach step as well as zinc and hence the leach solution contains manganese and chlorine ions as well as zinc ions.

The products of the leach step 12 are then subjected to a liquid/solids separation step 14, from which the residue is discarded or treated for the recovery of contained values, the product solution then being subjected to any necessary purification step 16, the nature of which will be clear to a person skilled in the art. The solution is then passed to an electro-winning step 18 where zinc is deposited on the cathode. Zinc is removed from the cathode from time to time as zinc product, and the spent electrolyte is then treated with ozone in manganese and chlorine removal step 20.

As shown in Figure 2, the manganese and chlorine removal step 20 includes three cells 22, 24 and 26 through which the solution is passed in succession. Ozonized oxygen is passed in succession through the cells 26, 24, 22 in countercurrent flow to the solution flow.

An appreciable amount of manganese ions are oxidized to manganese dioxide in the first cell 22 and a greater amount of manganese ions are oxidized to manganese dioxide in the second cell 24, with a relatively small amount of manganese ions being oxidized to manganese dioxide in the third cell 26. A very small amount of chlorine ions are oxidized in the first cell 22, and a slightly greater amount of chlorine ions are oxidized in the second cell 24. However, a substantial amount of chlorine ions are oxidized in the third cell 26 where the manganese ion concentration is at a low value.

Most of the oxidized chlorine ions are released from the solution as chlorine gas, although a small proportion of the chlorine ions may be retained in the solution. The manganese dioxide is entrained in the solution and flows out of cell 26 to a liquid/solids separation step 28 where the manganese dioxide is separated from the solution. The remaining solution is then recycled to the leach step 12.

Although the liberated chlorine gas consequently passes with the ozone flow through the second and first cells 24, 22 it has been found that there is no significant absorption of chlorine gas by the solution in these cells. The unused ozone which has passed through the cells may be recycled, with the chlorine contained therein being removed in some suitable manner, for example by passage through a sulphite solution.

In a specific example of the preferred embodiment of the invention described above, 1.5 L/min of ozonized oxygen containing 57.5 mg/L ozone was passed sequentially through the three cells countercurrently to a solution passed through the cells at a rate of 15 L/min, the solution and the gas being at a temperature of about 23°C. The solution contained 150 g/L sulphuric acid, 50 g/L zinc ions, 3.74 g/L manganese ions and 107 mg/L chlorine ions. The solution thus had a free acidity of about 1.3 molar.

The manganese and chlorine ion concentrations in the first cell 22 stabilized at 2.5 g/L manganese (33% removal) and 106 mg/L chlorine (less than 1% removal). The second cell stabilized at 0.7 g/L manganese (81% removal) and 80 mg/L chlorine (25% removal). The third cell 26 stabilized at 0.03 g/L manganese (more than 99% remova) and 3 mg/L chlorine (97% removal).

It will be noted that there was no significant removal of chlorine ions in the first cell 22, neither was chlorine gas in the gas passing through the first cell 22 absorbed by the solution therein.

The preferred embodiment concerns the extraction of zinc from zinc sulphidic material which also contains manganese and chlorine. As indicated earlier, the invention is equally applicable to situations where manganese has been introduced into the process by the use of manganese dioxide during the leach step 12 and/or where chloride ion has been introduced into the process by the use of zinc dross contaminated with chlorine during the purification step 16.

## Claims

1. A process of reducing the chloride ion content of aqueous acidic zinc sulphate solutions containing chloride ion in an amount of at least 50 mg/L and manganese, which comprises adjusting, if necessary, the free acidity of the solution to 0.1 molar or above and treating the solution with ozone for a period of time sufficient to remove a substantial part of the manganese ion, characterised in that following the said removal of the said substantial part of the manganese the ozone

treatment is continued to remove a manganese amount of greater than 99% based on the original manganese content, thereby concomitantly removing also at least a major proportion of the chlorine ion based on the original chloride ion concentration.

2. A process according to claim 1 wherein, before ozone treatment, the solution contains from 100 to 1000 mg/L chloride ions, and the treatment is effective to reduce the chloride ion concentration to less than 50 mg/L.

3. A process according to claim 1 wherein, before the ozone treatment, the solution contains from 50 to 100 mg/L chloride ions, and the solution after treatment contains less than 10 mg/L chloride ions.

4. A process according to claim 1, 2 or 3, wherein the aqueous acidic sulphate solution subjected to the ozone treatment has a free acidity of from 0.1 to 2.5 molar.

5. A process according to any one of claims 1—4 wherein, before ozone treatment, the solution contains from 5 to 170 mg/L zinc ions, and from 1 to 25 g/L manganese ions.

6. A process according to claim 5 wherein, before ozone treatment, the solution contains from 30 to 60 g/L zinc ions, and from 4 to 12 g/L manganese ions.

7. A process according to any one of claims 1—6 wherein the temperature of the solution during ozone treatment is from 20 to 60°C.

8. A process according to any one of claims 1—7 wherein the ozone treatment is effected by passing the acidic sulphate solution in succession through at least two cells and passing ozone in succession through the cells in countercurrent flow to the solution flow.

9. A process according to any one of the preceding claims, wherein the aqueous acidic zinc sulphate solution is a spent electrolyte solution obtained by leaching a zinc-containing material with aqueous sulphuric acid and electrolysing the leach solution to recover the zinc therefrom, the said spent electrolyte solution containing manganese and chloride ions resulting from

1) leaching a zinc-containing material which also contains manganese and a chloride-ion yielding material,

2) leaching a zinc-containing material which also contains manganese, and adding a chloride ion-yielding material to the leach solution prior to electrolysis, or

3) leaching a zinc-containing material which also contains a chloride ion-yielding material, and adding a manganese compound to the leach solution prior to electrolysis.

10. A method for the recovery of zinc from zinc-containing material which comprises leaching the zinc-containing material with aqueous sulphuric acid and electrolysing the leach solution to recover elemental zinc as a cathode deposit, wherein said zinc-containing material contains manganese and/or a chloride-ion yielding material, or a manganese and/or chloride-ion yielding material is added to the leach solution prior to electrolysis, thereby to yield an aqueous acidic zinc sulphate solution containing both manganese and chloride characterised in that the spent electrolyte is treated by a process as claimed in any one of claims 1—8 for removal of manganese and chloride ion, and then further treated for the recovery of additional zinc.

11. A method according to claim 10, wherein the spent electrolyte, after removal of said manganese and chloride ion, is recycled to the leaching step.

**Patentansprüche**

1. Verfahren zur Verringerung des Chloridionen-Gehalts von wässrigen sauren Zinksulfatlösungen, die Chloridionen in einer Menge von mindestens 50 mg/l sowie Mangan enthalten, bei dem im Bedarfsfall die freie Azidität der Losung auf 0,1 molar oder darüber eingestellt und die Lösung eine ausreichende Zeitdauer mit Ozon behandelt wird, um einen wesentlichen Teil der Manganionen zu entfernen, dadurch gekennzeichnet, daß auf die Entfernung des genannten wesentlichen Teils des Mangans folgend die Ozonbehandlung fortgesetzt wird, um eine Manganmenge von mehr als 99%, bezogen auf den ursprünglichen Mangangehalt, zu entfernen, wobei gleichzeitig auch zumindest ein überwiegender Anteil der Chloridionen, basierend auf der ursprünglichen Chloridionen-Konzentration, entfernt wird.

2. Verfahren nach Anspruch 1, bei dem vor der Ozonbehandlung die Lösung 100 bis 1.000 mg/l Chloridionen enthält und die Behandlung dahingehend wirksam ist, daß die Chloridionen-Konzentration auf weniger als 50 mg/l reduziert wird.

3. Verfahren nach Anspruch 1, bei dem vor der Ozonbehandlung die Lösung 50 bis 100 mg/l Chloridionen enthält und die Lösung nach der Behandlung weniger als 10 mg/l Chloridionen enthält.

4. Verfahren nach Anspruch 1, 2 oder 3, bei dem die wässrige saure Sulfatlösung, die der Ozonbehandlung unterzogen wird, eine freie Azidität von 0,1 bis 2,5 molar hat.

5. Verfahren nach einem der Ansprüche 1 bis 4, bei dem vor der Ozonbehandlung die Lösung 5 bis 170 mg/l Zinkionen sowie 1 bis 25 g/l Manganionen enthält.

6. Verfahren nach Anspruch 5, bei dem vor der Ozonbehandlung die Lösung 30 bis 60 g/l Zinkionen und 4 bis 12 g/l Manganionen enthält.

7. Verfahren nach einem der Ansprüche 1 bis 6, bei dem die Temperatur der Lösung während der Ozonbehandlung 20 bis 60°C beträgt.

8. Verfahren nach einem der Ansprüche 1 bis 7, bei dem die Ozonbehandlung in der Weise ausgeführt wird, daß die saure Sulfatlösung nacheinander durch mindestens zwei Zellen hindurchgeführt wird und Ozon nacheinander dur die Zellen im Gegenstrom zu dem Lösungsstrom hindurchgeleitet wird.

9. Verfahren nach einem der vorhergehenden Ansprüche bei dem die wässrige saure Zinksulfatlösung eine verbrauchte Elektrolytlösung ist, die durch Laugung eines zinkhaltigen Materials mit wässriger Schwefelsäure und durch Elektrolyse der Laugungslösung zum Zweck der Zinkgewinnung daraus erhalten wurde, wobei die verbrauchte Elektrolytlösung Mangan- und Chloridionen als Ergebnis.

1) einer Laugung eins zinkhaltigen Materials, das ebenfalls Mangan sowie ein Chloridionen lieferndes Material enthält,

2) einer Laugung eines zinkhaltigen Materials, das ebenfalls Mangan enthält, und einer Zugabe eines Chloridionen liefernden Materials zu der Laugungslösung vor der Elektrolyse oder

3) einer Laugung eines zinkhaltigen Materials, das ebenfalls ein Chloridionen lieferndes Material enthält, und einer Zugabe einer Manganverbindung zu der Laugungslösung vor der Elektrolyse enthält.

10. Verfahren zur Gewinnung von Zink aus zinkhaltigem Material, das eine Laugung des zinkhaltigen Materials mit wässriger Schwefelsäure und eine Elektrolyse der Laugungslösung zur Gewinnung von Zink als Kathodenanlagerung beinhaltet, wobei das zinkhaltige Material Mangan und/oder ein Chloridionen lieferndes Material enthält oder ein Mangan und/oder Chloridionen lieferndes Material der Laugungslösung vor der Elektrolyse zugegeben wird, um dadurch eine wässrige saure Zinksulfatlösung hervorzubringen, die sowohl Mangan als auch Chlorid enthält, dadurch gekennzeichnet, daß der verbrauchte Elektrolyt mittels eines Verfahrens nach einem der Ansprüche 1 bis 8 zur Entfernung von Mangan- und Chloridionen behandelt wird un danach zur Gewinnung von zusätzlichem Zink weiterbehandelt wird.

11. Verfahren nach Anspruch 10, bei dem der verbrauchte Elektrolyt nach der Entfernung der Mangan- und Chloridionen in den Laugungsvorgang wieder rückgeführt wird.

**Revendications**

1. Procédé de réduction de la teneur en ions chlorure de solutions aqueuses acides de sulfate de zinc contenant des ions chlorure en quantité d'au moins 50 mg/l et du manganèse, qui consiste à ajuster si nécessaire l'acidité libre de la solution à 0,1 M ou plus et à traiter la solution par l'ozone pendant une durée suffisante pour éliminer une partie importante des ions manganèse, caractérisé en ce que, après ladite élimination de ladite partie notable du manganèse, on continue le traitement à l'ozone pour éliminer une quantité de manganèse de plus de 99%, par rapport à la teneur initiale en manganèse, en éliminant ainsi également de manière concomitante au moins une proportion principale des ions chlorure, par rapport à la concentration initiale des ions chlorure.

2. Procédé selon la revendication 1, dans lequel, avant le traitement par l'ozone, la solution contient de 100 à 1000 mg/l d'ions chlorure et le traitement est efficace pour réduire la concentration en ions chlorure à moins de 50 mg/l.

3. Procédé selon la revendication 1, dans lequel avant le traitement à l'ozone, la solution contient de 50 à 100 mg/l d'ions chlorure et la solution contient un prétraitement de moins de 10 mg/l d'ions chlorure.

4. Procédé selon la revendication 1, 2 ou 3, dans lequel la solution aqueuse acide de sulfate soumise au traitement à l'ozone a une acidité libre de 0,1 à 2,5 M.

5. Procédé selon l'une quelconque des revendications 1 à 4, dans lequel avant le traitement à l'ozone, la solution contient de 5 à 170 mg/l d'ions zinc et de 1 à 25 g/l d'ions manganèse.

6. Procédé selon la revendication 5, dans lequel avant le traitement à l'ozone, la solution contient de 30 à 60 g/l d'ions zinc et de 4 à 12 g/l d'ions manganèse.

7. Procédé selon l'une quelconque des revendications 1 à 6, dans lequel la température de la solution pendant le traitement à l'ozone est de 20 à 60°C.

8. Procédé selon l'une quelconque des revendications 1 à 7, dans lequel le traitement à l'ozone est effectué par passage de la solution acide de sulfate successivement à travers au moins deux cellules et passage d'ozone successivement à travers les cellules à contre-courant par rapport à la solution.

9. Procédé selon l'une quelconque des revendications précédentes, dans lequel la solution aqueuse acide de sulfate de zinc est une solution usée d'électrolyte obtenue par lixiviation d'un matériau zincifère par l'acide sulfurique aqueux et électrolyse de la solution di lixiviation pour en éliminer le zinc, ladite solution usée d'électrolyte contenant des ions manganèse et des ions chlorure résultant:

1) de la lixiviation d'un matériau zincifère qui contient également du manganèse et une matière donnant des ions chlorure,

2) de la lixiviation d'un matériau zincifère qui contient également du manganèse et de l'addition d'une matière donnant des ions chlorure à la solution de lixiviation avant l'électrolyse, ou bien

3) de la lixiviation d'un matériau zincifère qui contient également une matière donnant des ions chlorure et de l'addition d'un composé de manganèse à la solution de lixiviation avant l'électrolyse.

10. Procédé pour la récupération du zinc d'un matériau zincifère qui comprend la lixiviation du matériau zincifère par l'acide sulfurique aqueux et l'électrolyse de la solution de lixiviation pour récupérer le zinc élémentaire déposé à la cathode, dans lequel ledit matériau zincifère contient du manganèse et/ou une matière donnant des ions chlorure, ou bien on ajoute une matière donnant du manganèse et/ou des ions chlorure à la solution de lixiviation avant l'électrolyse, pour

donner ainsi une solution aqueuse acide de sulfate de zinc contenant à la fois des ions manganèse et des ions chlorure, caractérisé en ce que l'on traite l'électrolyte usé par un procédé selon l'une quelconque des revendications 1 à 8 pour l'élimination des ions manganèse et des ions chlorure et ensuite on le traite encore pour récupérer du zinc supplémentaire.

11. Procédé selon la revendication 10, dans lequel l'électrolyte usé, après élimination desdits ions manganèse et ions chlorure, est recyclé à l'étape de lixiviation.

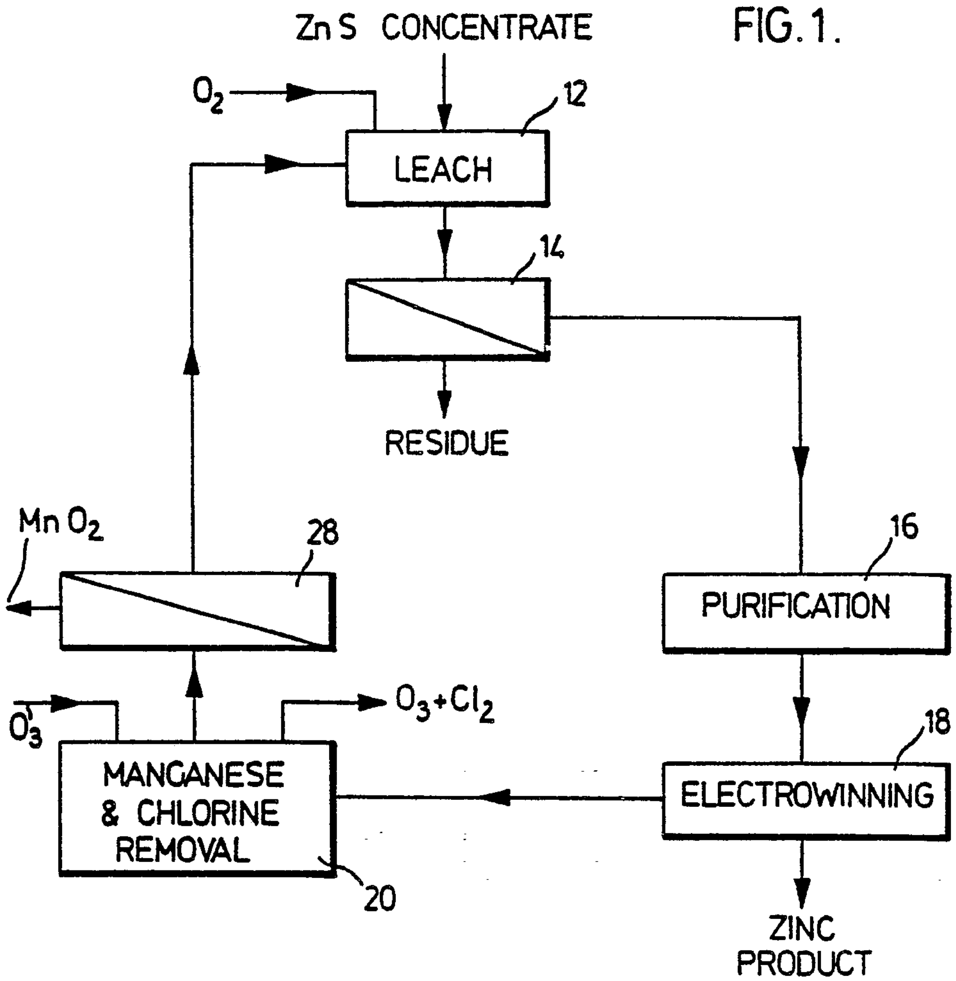
Zn S CONCENTRATE
$O_2$
12
LEACH
14
RESIDUE
Mn $O_2$
28
16
PURIFICATION
$O_3$
$O_3+Cl_2$
MANGANESE
& CHLORINE
REMOVAL
18
ELECTROWINNING
20
ZINC
PRODUCT

FIG. 1.

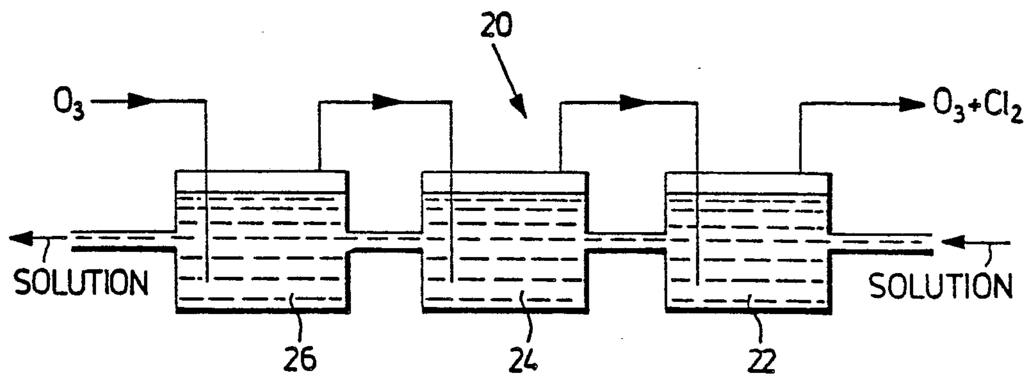
20
$O_3$
$O_3+Cl_2$
SOLUTION
SOLUTION
26
24
22

FIG. 2.